# EUROPEAN PATENT SPECIFICATION

(11) **EP 2 850 242 B1**
(45) Date of publication and mention of the grant of the patent: **21.06.2017**
(21) Application number: 13790180.7
(22) Date of filing: 14.05.2013
(51) Int. Cl.: D06M 17/00, B32B 5/26, A41D 31/02, A41D 31/00, A62B 17/00, B32B 5/02, B32B 5/06, B32B 7/14

(54) **MULTILAYER FABRIC STRUCTURES**
MEHRSCHICHTIGE STOFFSTRUKTUREN
STRUCTURES EN ÉTOFFE MULTICOUCHE

(30) Priority: 16.05.2012 US 201213473044
(43) Date of publication of application: 25.03.2015
(73) Proprietor: The North Face Apparel Corp., Wilmington, DE 19810 (US)
(72) Inventor: LY, John Thiet, Richmond, California 94801 (US)
(74) Representative: Lehmann Novo, Maria Isabel
(86) International application number: PCT/US2013/040864
(87) International publication number: WO 2013/173276

(56) References cited:
- EP-A2- 0 119 754
- EP-A2- 1 473 059
- JP-A- S62 289 446
- US-A- 3 577 305
- US-A- 5 131 097
- US-A- 6 030 908
- US-A1- 2004 096 629
- US-A1- 2007 130 667
- US-A1- 2011 033 686
- US-B2- 7 493 679

## Description

### Technical Field

The present invention relates to fabrics for thermal insulation, such as those used in outerwear garments.

### Background

Non-woven fabrics can be used as an insulating interliner for many types of garments, such as winter coats or jackets. In addition to imparting thermal insulation, using non-woven fabrics are desirable because of their flexibility, water resistance, breathability, compressibility, and/or cushioning. However, non-woven fabrics generally have less durability and strength, and thus, are typically stabilized by sewn-through construction (e.g. quilting) to the shell fabric when used as an insulating interliner. The sewn-through construction can compress the non-woven fabric interliner, thus creating cold spots that can impair the thermal insulation ability of the non-woven interliner. Therefore, there is a need for improved construction of interlining insulation using non-woven fabrics.

EP1473059 discloses a thermal protection jacket for use by a fire-fighter comprising: a first fabric sheet, a second fabric sheet, an central sheet of felt between the first fabric and the second fabric, a first set of elongated strips of felt between the interlayer fabric and the first fabric; and a second set of the same type of pieces between the interlayer fabric and the second fabric. In the multilayer fabric of EP1473059, the layers are stitched together at the cuffs,neck and waist and the non-woven pieces are located between these attachments points.

### Summary

The present invention provides multilayer fabric structures containing a non-woven fabric for insulation purposes.

The multilayer fabric structure of the present invention comprises: a first woven fabric sheet; a second woven fabric sheet; an interlayer woven fabric sheet between the first fabric and the second fabric; a first set of non-woven fabric pieces between the interlayer fabric and the first fabric; and a second set of non-woven fabric pieces between the interlayer fabric and the second fabric.

In some embodiments, the first and second set of non-woven insulation pieces have a concave shape with the concavity facing outward (i.e. first piece concavity facing towards the first fabric, second piece concavity facing towards the second fabric). The non-woven fabric pieces may have any concave shape, including U-shaped and V-shaped, for creating air pockets in the multilayer fabric structure, thus enhancing the insulation capabilities. The non-woven fabric pieces may be attached to other fabrics in the multilayer fabric structure in such a manner to cause the non-woven piece to bend into a concave shape. For example, the non-woven pieces may be stitched at or near the middle to bend the piece into a concave U-shape or V-shape.

The present invention also provides methods of making a multilayer fabric structure.

The method comprises attaching a first set of non-woven fabric pieces onto an interlayer non-woven fabric sheet; applying a first woven fabric sheet to the side of the first set of non-woven pieces opposite to the interlayer fabric; applying a second set of non-woven fabric pieces onto the interlayer fabric on the side opposite the first set of non-woven pieces; attaching the second set of non-woven pieces to the first fabric through the interlayer fabric; applying a second woven fabric sheet onto the set second of non-woven pieces on the side opposite the interlayer fabric; and attaching the second woven fabric to the interlayer fabric.

In some embodiments, the method further comprises pinching together and stitching the interlayer fabric at multiple points to create multiple seam allowances, and the step of attaching the second woven fabric to the interlayer fabric comprises attaching the seam allowances to the second woven fabric. In some embodiments, the step of attaching the second set of non-woven pieces to the first fabric comprises stitching the second set of non-woven pieces at or near the middle of each. In some embodiments, the step of attaching the first set of non-woven fabric pieces onto the interlayer fabric comprises stitching the non-woven fabric pieces at or near the middle of each.

### Brief Description of the Drawings

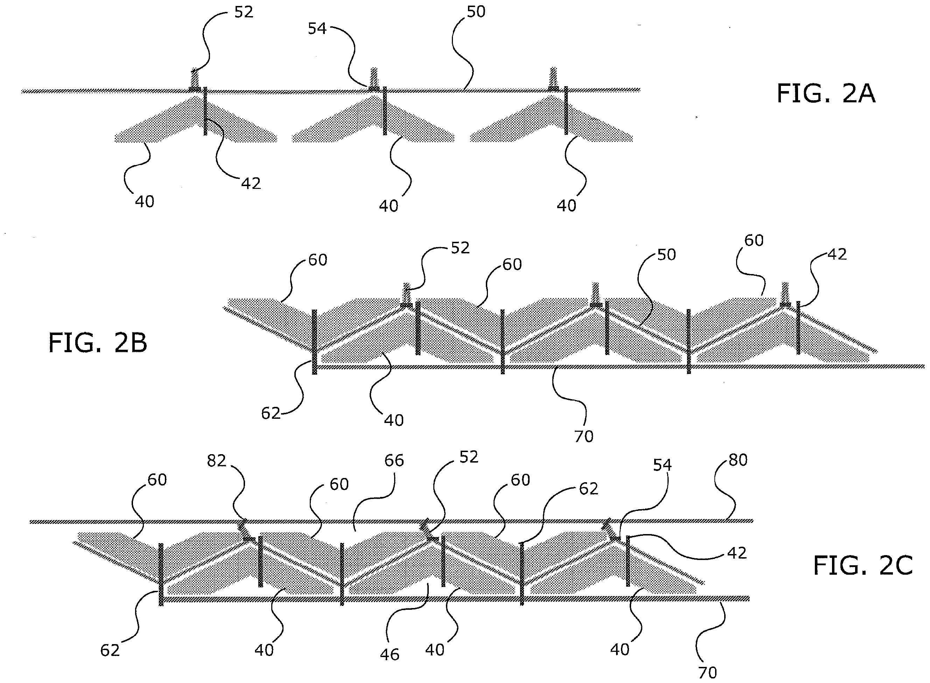

FIGS. 2A - 2C show cross-section side views of a portion of a multilayer fabric structure according to another embodiment of the present invention.

### Detailed Description

The present invention provides multilayer fabric structures containing a non-woven fabric for insulation purposes. Examples of non-woven fabric used in the multilayer fabric structure of the present invention include polyester fiberfill, Primaloft®, Thinsulate® (3M), and Hollofil® (Invista). Non-woven fabrics are materials having a structure in which fibers or filaments are entangled together to form a sheet or web structure. In contrast to woven fabrics, non-woven fabrics are not made by conventional weaving or knitting and do not require converting the fibers to yarn. Further information about non-woven fibers can be found in Nonwoven Fabrics: Raw Materials, Manufacture, Applications, Characteristics, Testing Processes, ed. Wilhelm Albrecht et al. (2003).

The woven or non-woven fabrics used in the present invention may be made from any suitable material, including synthetic materials (e.g. nylon), natural materials (e.g. cotton or wool), or combinations thereof. Attachment of fabrics together may be performed by sewing, stitching, adhesive bonding, or any other conventional technique for fixing pieces of fabric together. Multilayer fabric structures of the present invention can be used in a variety of fabric articles, including garments (e.g. outerwear, gloves, and footwear), sleeping bags, or other fabric articles that can benefit from thermal insulation.

In one embodiment of the present invention, the non-woven fabric is made to have a baffle configuration to improve the insulation capabilities. As an example of this embodiment, FIGS. 2A - 2C show cross-section side views of a portion of a multilayer fabric structure. This multilayer fabric structure uses pieces (e.g. strips or other suitably shaped pieces of fabric) of non-woven fabric that are arranged in a zig-zag pattern. As shown in FIG. 2A, a woven fabric sheet 50 (interlayer fabric) is pinched together and stitched at points 54 to create allowances 52. A first set of strips 40 of non-woven fabric are attached to interlayer fabric 50 by stitching 42 at or near the middle of each strip 40. As shown in FIG. 2B, a second set of strips 60 of the same non-woven fabric are laid over interlayer fabric 50 in overlapping position relative to the first set of strips 40. These second set of non-woven fabric strips 60 are stitched through interlayer fabric 50 and onto a woven fabric sheet 70 (e.g. liner fabric) by stitching 62 at or near the middle of each strip 60. As shown in FIG. 2C, the allowances 52 of interlayer fabric 50 are stitched to another woven fabric sheet 80 (e.g. exterior taffeta fabric) by stitching 82.
section side views of a portion of a multilayer fabric structure. This multilayer fabric structure uses pieces (e.g. strips or other suitably shaped pieces of fabric) of non-woven fabric that are arranged in a zig-zag pattern. As shown in FIG. 2A, a woven fabric sheet 50 (interlayer fabric) is pinched together and stitched at points 54 to create allowances 52. A first set of strips 40 of non-woven fabric are attached to interlayer fabric 50 by stitching 42 at or near the middle of each strip 40. As shown in FIG. 2B, a second set of strips 60 of the same non-woven fabric are laid over interlayer fabric 50 in overlapping position relative to the first set of strips 40. These second set of non-woven fabric strips 60 are stitched through interlayer fabric 50 and onto a woven fabric sheet 70 (e.g. liner fabric) by stitching 62 at or near the middle of each strip 60. As shown in FIG. 2C, the allowances 52 of interlayer fabric 50 are stitched to another woven fabric sheet 80 (e.g. exterior taffeta fabric) by stitching 82.

As seen in FIG. 2C, this stitching pattern causes the non-woven fabric strips to adopt a V-shaped appearance, with the hollowed inward portion (concavity) facing outward. The concave shapes of the non-woven strips create air pockets 46 and 66 that enhance thermal insulation. Moreover, this stitching pattern maintains greater depth between exterior fabric 80 and liner fabric 70, which reduces the cold spots in the fabric structure (as compared to a sewn-through stitching construction, in which the stitch would go from the top of the exterior fabric 80, through interlayer fabric 50, and emerge out of the bottom of liner fabric 70).

According to convention or to facilitate explanation, structural descriptions herein (e.g. attachment points, etc.) represent the structure as seen from a cross-section side view of the fabric structure (e.g. as in FIGS. 2A - 2C). As such, when the fabric structure is viewed from a different aspect, the structural configurations may be represented differently. For example, where the description herein refers to stitching at a point, this may represent a stitch line in top view.

## Claims

1. A multilayer fabric structure comprising:
a first woven fabric sheet;
a second woven fabric sheet;
an interlayer woven fabric sheet between the first fabric and the second fabric;
a first set of non-woven fabric pieces between the interlayer fabric and the first fabric;
a second set of non-woven fabric pieces between the interlayer fabric and the second fabric;
wherein the interlayer fabric is attached to the second fabric at multiple attachment points, and wherein the second set of non-woven pieces are located between the attachment points of the interlayer fabric to the second fabric; and
wherein the interlayer fabric is pinched at multiple points to create multiple seam allowances that serve as attachment points to the second fabric, wherein the second set of non-woven pieces are located between the seam allowances.

2. The multilayer fabric structure of claim 1, wherein the first set of non-woven pieces are located between the attachment points of the first fabric to the second set of non-woven pieces.

3. The multilayer fabric structure of claim 2, wherein the attachment points of the second set of non-woven pieces to the first fabric alternate in lateral position with the attachment points of the first set of non-woven pieces to the interlayer fabric.

4. The multilayer fabric structure of claim 1, wherein the second set of non-woven pieces are attached to the first fabric through the interlayer fabric.

5. The multilayer fabric structure of claim 1, wherein the first set of non-woven pieces are in overlapping position with the second set of non-woven pieces.

6. The multilayer fabric structure of claim 1, wherein the second set of non-woven pieces have a concave shape with the concavity facing outward.

7. The multilayer fabric structure of claim 6, wherein the first set of non-woven pieces have a concave shape with the concavity facing outward.

8. The multilayer fabric structure of claim 1, wherein the attachment point of the second set of non-woven pieces to the first fabric is located at or near the middle of each non-woven piece.

9. The multilayer fabric structure of claim 8, wherein the attachment point of the first set of non-woven pieces to the interlayer fabric is located at or near the middle of each non-woven piece.

10. A garment or fabric article comprising the multilayer fabric structure of claim 1.

11. A method of making a multilayer fabric structure, comprising:
attaching a first set of non-woven fabric pieces onto an interlayer non-woven fabric sheet;
applying a first woven fabric sheet to the side of the first set of non-woven pieces opposite to the interlayer fabric;
applying a second set of non-woven fabric pieces onto the interlayer fabric on the side opposite the first set of non-woven pieces;
attaching the second set of non-woven pieces to the first fabric through the interlayer fabric;
applying a second woven fabric sheet onto the set second of non-woven pieces on the side opposite the interlayer fabric;
attaching the second woven fabric to the interlayer fabric;
wherein the interlayer fabric is attached to the second fabric at multiple attachment points, and wherein the second set of non-woven pieces are located between the attachment points of the interlayer fabric to the second fabric; and
wherein the interlayer fabric is pinched at multiple points to create multiple seam allowances that serve as attachment points to the second fabric, wherein the second set of non-woven pieces are located between the seam allowances.

## Patentansprüche

1. Mehrschichtige Stoffstruktur, aufweisend:
ein erstes Webstoff-Flächengebilde;
ein zweites Webstoff-Flächengebilde;
ein Zwischenschicht-Webstoff-Flächengebilde zwischen dem ersten Stoff und dem zweiten Stoff;
einen ersten Satz von Vliesstoffstücken zwischen dem Zwischenschichtstoff und dem ersten Stoff;
einen zweiten Satz von Vliesstoffstücken zwischen dem Zwischenschichtstoff und dem zweiten Stoff;
wobei der Zwischenschichtstoff an zahlreichen Befestigungspunkten an dem zweiten Stoff befestigt ist und wobei der zweite Satz von Vliesstücken sich zwischen den Befestigungspunkten des Zwischenschichtstoffs an dem zweiten Stoff befindet; und
wobei der Zwischenschichtstoff an zahlreichen Punkten eingehalten ist, um zahlreiche Nahtzugaben zu schaffen, die als Befestigungspunkte an dem zweiten Stoff dienen, wobei der zweite Satz von Vliesstücken sich zwischen den Nahtzugaben befindet.

2. Mehrschichtige Stoffstruktur nach Anspruch 1, wobei der erste Satz von Vliesstücken sich zwischen den Befestigungspunkten des ersten Stoffs an dem zweiten Satz von Vliesstücken befindet.

3. Mehrschichtige Stoffstruktur nach Anspruch 2, wobei die Befestigungspunkte des zweiten Satzes von Vliesstücken an dem ersten Stoff in seitlicher Position mit den Befestigungspunkten des ersten Satzes von Vliesstücken an dem Zwischenschichtstoff abwechseln.

4. Mehrschichtige Stoffstruktur nach Anspruch 1, wobei der zweite Satz von Vliesstücken durch den Zwischenschichtstoff hindurch an dem ersten Stoff befestigt ist.

5. Mehrschichtige Stoffstruktur nach Anspruch 1, wobei der erste Satz von Vliesstücken sich in einer überlappenden Position mit dem zweiten Satz von Vliesstücken befindet.

6. Mehrschichtige Stoffstruktur nach Anspruch 1, wobei der zweite Satz von Vliesstücken eine konkave Form aufweist, wobei die Konkavität nach außen weist.

7. Mehrschichtige Stoffstruktur nach Anspruch 6, wobei der erste Satz von Vliesstücken eine konkave Form aufweist, wobei die Konkavität nach außen weist.

8. Mehrschichtige Stoffstruktur nach Anspruch 1, wobei der Befestigungspunkt des zweiten Satzes von Vliesstücken an dem ersten Stoff sich in oder nahe der Mitte jedes Vliesstücks befindet.

9. Mehrschichtige Stoffstruktur nach Anspruch 8, wobei der Befestigungspunkt des ersten Satzes von Vliesstücken an dem Zwischenschichtstoff sich in oder nahe der Mitte jedes Vliesstücks befindet.

10. Kleidungsstück oder Stoffgegenstand, das bzw. der die mehrschichtige Stoffstruktur nach Anspruch 1 aufweist.

11. Verfahren zum Herstellen einer mehrschichtigen Stoffstruktur, aufweisend:
Befestigen eines ersten Satzes von Vliesstoffstücken auf einem Zwischenschicht-Vliesstoff-Flächengebilde;
Aufbringen eines ersten Webstoff-Flächengebildes auf die Seite des ersten Satzes von Vliesstücken gegenüber dem Zwischenschichtstoff;
Aufbringen eines zweiten Satzes von Vliesstoffstücken auf den Zwischenschichtstoff auf der Seite gegenüber dem ersten Satz von Vliesstücken;
Befestigen des zweiten Satzes von Vliesstücken an dem ersten Stoff durch den Zwischenschichtstoff hindurch;
Aufbringen eines zweiten Webstoff-Flächengebildes auf den zweiten Satz von Vliesstücken auf der Seite gegenüber dem Zwischenschichtstoff;
Befestigen des zweiten Webstoffs an dem Zwischenschichtstoff;
wobei der Zwischenschichtstoff an zahlreichen Befestigungspunkten an dem zweiten Stoff befestigt wird und wobei der zweite Satz von Vliesstücken sich zwischen den Befestigungspunkten des Zwischenschichtstoffs an dem zweiten Stoff befindet; und
wobei der Zwischenschichtstoff an zahlreichen Punkten eingehalten ist, um zahlreiche Nahtzugaben zu schaffen, die als Befestigungspunkte an dem zweiten Stoff dienen, wobei der zweite Satz von Vliesstücken sich zwischen den Nahtzugaben befindet.

## Revendications

1. Structure en étoffe multicouche comprenant :
une première couche d'étoffe tissée ;
une deuxième couche d'étoffe tissée ;
une couche intermédiaire d'étoffe tissée entre la première étoffe et la deuxième étoffe ;
un premier ensemble de pièces d'étoffe non tissée entre la couche intermédiaire d'étoffe et la première étoffe ;
un deuxième ensemble de pièces d'étoffe non tissée entre la couche intermédiaire d'étoffe et la deuxième étoffe ;
dans laquelle la couche intermédiaire d'étoffe est fixée à la deuxième étoffe en de multiples points de fixation, et dans laquelle le deuxième ensemble de pièces non tissées est situé entre les points de fixation de la couche intermédiaire d'étoffe à la deuxième étoffe ; et
dans laquelle la couche intermédiaire d'étoffe est pincée en de multiples points pour former de multiples ressources de couture qui servent de points de fixation à la deuxième étoffe, le deuxième ensemble de pièces non tissées étant situé entre les ressources de couture.

2. Structure en étoffe multicouche selon la revendication 1, dans laquelle le premier ensemble de pièces non tissées est situé entre les points de fixation de la première étoffe au deuxième ensemble de pièces non tissées.

3. Structure en étoffe multicouche selon la revendication 2, dans laquelle les points de fixation du deuxième ensemble de pièces non tissées à la première étoffe alternent en position latérale avec les points de fixation du premier ensemble de pièces non tissées à la couche intermédiaire d'étoffe.

4. Structure en étoffe multicouche selon la revendication 1, dans laquelle le deuxième ensemble de pièces non tissées est fixé à la première étoffe via la couche intermédiaire d'étoffe.

5. Structure en étoffe multicouche selon la revendication 1, dans laquelle le premier ensemble de pièces non tissées est disposé en position de chevauchement avec le deuxième ensemble de pièces non tissées.

6. Structure en étoffe multicouche selon la revendication 1, dans laquelle le deuxième ensemble de pièces non tissées est de forme concave, la concavité faisant face à l'extérieur.

7. Structure en étoffe multicouche selon la revendication 6, dans laquelle le premier ensemble de pièces non tissées est de forme concave, la concavité faisant face à l'extérieur.

8. Structure en étoffe multicouche selon la revendication 1, dans laquelle le point de fixation du deuxième ensemble de pièces non tissées à la première étoffe est situé au milieu ou près du milieu de chaque pièce non tissée.

9. Structure en étoffe multicouche selon la revendication 8, dans laquelle le point de fixation du premier ensemble de pièces non tissées à la couche intermédiaire d'étoffe est situé au milieu ou près du milieu de chaque pièce non tissée.

10. Vêtement ou article en étoffe comprenant la structure en étoffe multicouche selon la revendication 1.

11. Procédé de fabrication d'une structure en étoffe multicouche, comprenant :
la fixation d'un premier ensemble de pièces d'étoffe non tissée sur une couche intermédiaire d'étoffe non tissée ;
l'application d'une première couche d'étoffe tissée sur le côté du premier ensemble de pièces non tissées opposé à la couche intermédiaire d'étoffe ;
l'application d'un deuxième ensemble de pièces d'étoffe non tissée sur la couche intermédiaire d'étoffe sur le côté opposé au premier ensemble de pièces non tissées ;
la fixation du deuxième ensemble de pièces non tissées à la première étoffe via la couche intermédiaire d'étoffe ;
l'application d'une deuxième couche d'étoffe tissée sur le deuxième ensemble de pièces non tissées sur le côté opposé à la couche intermédiaire d'étoffe ;
la fixation de la deuxième étoffe tissée à la couche intermédiaire d'étoffe ;
dans lequel la couche intermédiaire d'étoffe est fixée à la deuxième étoffe en de multiples points de fixation, et dans lequel le deuxième ensemble de pièces non tissées est situé entre les points de fixation de la couche intermédiaire d'étoffe à la deuxième étoffe ; et
dans lequel la couche intermédiaire d'étoffe est pincée en de multiples points pour former de multiples ressources de couture qui servent de points de fixation à la deuxième étoffe, le deuxième ensemble de pièces non tissées étant situé entre les ressources de couture.
